# EUROPEAN PATENT SPECIFICATION

(11) **EP 0 574 113 B1**
(45) Date of publication and mention of the grant of the patent: **21.05.1997**
(21) Application number: 93302202.2
(22) Date of filing: 23.03.1993
(51) Int. Cl.: C01G 3/02

(54) **Process and apparatus for treating copper chloride etching waste liquor**
Verfahren und Einrichtung zur Behandlung von Kupferchlorid enthaltender Ätzlösung
Procédé et appareil pour le traitement de liquides de décapage contenant du chlorure de cuivre

(30) Priority: 02.06.1992 JP 141449/92
(43) Date of publication of application: 15.12.1993
(73) Proprietor: HITACHI CHEMICAL COMPANY, LTD., Tokyo 163 (JP); HITACHI CHEMICAL TECHNO-PLANT CORPORATION, LTD., Chiyoda-ku, Tokyo (JP); CHEMIRITE, LTD., Chuo-ku Tokyo 104 (JP)
(72) Inventor: Uchida, Tatsuya, Shimodate-shi, Ibaraki-ken (JP); Suemitsu, Toshio, Oyama-shi, Tochigi-ken (JP); Hiratsuka, Tsugihiko, Shimodate-shi, Ibaraki-ken (JP); Sakai, Kango, Midori-ku, Yokohama-shi, Kanagawa-ken (JP)
(74) Representative: Rickard, Timothy Mark Adrian

(56) References cited:
- CHEMICAL ABSTRACTS, vol. 87, no. 18, 31 October 1977, Columbus, Ohio, US; abstract no. 138021k, OMISCHEL 'recovery of copper(ii)oxide from spent etching solutions' page 116 ;
- GMELIN 'gmelins handbuch der anorganischen chemie' 1958 , VERLAG CHEMIE , WEINHEIM system nr 60. teil b lieferung 1

## Description

### BACKGROUND OF THE INVENTION

### (a) Field of the Invention

The present invention relates to a process and an apparatus for treating copper chloride etching waste liquor which has been discharged from copper chloride etching apparatuses employed, for example, in producing printed wiring boards.

### (b) Description of the Related Art

In the production of printed wiring boards, circuits are generally made by using an etching method, wherein the copper foil on copper-clad laminates or the copper layer of electroless copper plated boards is etched with an etchant of aqueous iron chloride or copper chloride solution to dissolve the parts unnecessary for the circuits. During the etching, in order to prevent the deterioration of etching capacity due to the dissolution of copper, the etchant is regenerated and is adjusted to a uniform concentration by addition of desired agents, which generates increment liquid to be discharged from etching apparatuses as an etching waste liquor. The etching waste liquor is collected generally by the etchant makers or the industrial waste disposal or treatment trade, where it is regenerated or treated by various methods.

However, the recent increase in the volume of waste liquor is a serious problem since it worsens the transport difficulties and pushes the regeneration capacity to the limits thereby causing a surge in the regeneration and treatment costs. It, therefore, is no longer possible to depute treatment and regeneration to outsiders and there is an increasing demand for the techniques that enables the most desirable solution, namely completing the treatment or regeneration at the sources of the etching waste liquor at a low cost. Known techniques for treating or regenerating etching waste liquor include substitution of iron chloride etching waste liquor and electrolytic treatment of copper chloride etching waste liquor, which is disclosed in Japanese Patent Application Kokai Koho (Laid-open) No. 02-254188.

The substitution of iron chloride etching waste liquor, which is a mixed solution of iron chloride and copper chloride, is a method based on the tendency of iron and copper to ionization, wherein steel is added into an etching waste liquor to deposit copper on the steel, thereby forming a fresh iron chloride etchant. The method, however, provides iron chloride etchant in a large amount exceeding demand, and the resulting iron-copper composition, which is in itself an important metal resource, is difficult to separate into its each ingredients.

By the electrolytic treatment of copper chloride etching waste liquor disclosed in the Japanese Patent Application Kokai Koho (laid-open) No. 02-254188, copper is deposited on the cathode and is recovered as metal copper. The process, however, requires an environmental measure to counter the gaseous chlorine which generates simultaneously at the anode. Further, the peeling and collection of the electrodeposited copper from the cathode requires many hands, and thee automation of these procedures needs expensive equipment. There is another problem in that even the electrodeposited copper of high purity contains trace ingredients of the etching waste liquor, so that the reuse thereof also requires costly purification. Furthermore, although the electrolytic treatment is advantageous in that the regenerated liquid resulting from the removal of copper is reusable as an etchant, the electrolysis consumes much electricity, and this method may be difficult to smoothly link to the control and regeneration of etchant used in actual etching apparatuses.

As a method of treating iron-steel acid wash waste liquor, a process for obtain powdery iron oxides and aqueous hydrochloric acid solution by roasting an aqueous iron chloride waste is disclosed in Iron and Steel, No. 70, Vol. 14, 1984, Tasuo Obi, Takehiko Ohkubo, "Novel method of treating iron-steel acid wash waste by fluidized roasting" and Japanese Patent Application Kokai Koho (Laid-open) No. 63-315519.

### SUMMARY OF THE INVENTION

The object of the present invention is to provide a process and an apparatus for efficiently treating copper chloride etching waste liquor, and recovering industrially useful materials.

Copper chloride etchant is an aqueous solution containing cupric chloride as a main component. The method of etching copper with copper chloride etchant is a chemical method wherein copper is dissolved and removed following the reaction formula (1).

### Etching

Cu + CuCl₂ → 2CuCl (1)

The cuprous chloride resulting from the dissolution of copper slows down the rate of etching. Therefore, hydrochloric acid and hydrogen peroxide are added to the etchant to regenerate and control the cuprous chloride to a low concentration. The regeneration is expressed by the following reaction formula (2).

### Regeneration

2CuCl + 2HCl + H₂O₂ → 2CuCl₂ + 2H₂O (2)

That is, etching of one mole of copper causes one mole excess cupric chloride and two moles excess water, and the increment liquor due to the excess products is discharged from etching apparatuses. Since etching apparatuses are operated with the etchant kept to a constant concentration, the increment liquor is generally allowed to overflow the etchant circulating tanks installed under the etching apparatuses.

Herein, "copper chloride etching waste liquor" means the waste liquor discharged from the above-mentioned copper chloride etching for etching copper, and is an aqueous solution containing cupric chloride, hydrochloric acid, cuprous chloride and small amounts of other impurities. The copper chloride etching waste liquor generally contains 20 to 30 % by weight of cupric chloride, 3 to 5 % by weight of hydrochloric acid and 0.1 to 0.3 % by weight of cuprous chloride. That is, the waste liquor is a rich source of copper and chlorine, which may be regenerated into various copper materials and into hydrochloric acid for the above-mentioned regeneration uses, respectively.

The inventors studied methods for treating the copper chloride etching waste liquor and found that cupric oxide and hydrochloric acid are obtainable by exposing the copper chloride etching waste liquor to a high-temperature atmosphere by, for example, roasting. On the basis of the finding, they completed the present invention.

That is, the present invention is based on the inventors' novel conception of using thermal decomposition reactions for treating copper chloride etching waste liquor and also on the results of their experiments, from which it was confirmed that cupric oxide and hydrochloric acid could actually be obtained and be reused industrially.

The present application provides a process for treating copper chloride etching waste liquor which is generated in a process for etching copper with a copper chloride etchant comprising: exposing said copper chloride etching waste liquor to an atmosphere of a high temperature ranging from 450 to 1,200 °C in the presence of oxygen gas in a fluidized cylindrical shaft roasting furnace by introducing a hot combustion gas resulting from combustion of air and fuel into a bottom portion of said furnace from a blast furnace connected to the bottom portion, to generate cupric oxide and hydrogen chloride, separating said cupric oxide and said hydrogen chloride, collecting the separated cupric oxide, dissolving the separated hydrogen chloride into water to form hydrochloric acid, and collecting said hydrochloric acid.

The present invention also provides an apparatus for treating copper chloride etching waste liquor which is generated in a process for etching copper with a copper chloride etchant, comprising:
(a) a roasting furnace for exposing said copper chloride etching waste liquor, which has been concentrated in a concentrating tower, to an atmosphere of a high temperature ranging from 450 to 1,200 °C , in the presence of oxygen, to generate cupric oxide and a gas mixture containing hydrogen chloride and vapor,
(b) a cyclones for separating and collecting said cupric oxide from said gas mixture,
(c) a cooling tower for cooling remaining cupric oxide and said gas mixture which have been discharged from the cyclone to a temperature of 400 to 500 °C ,
(d) an electrostatic precipitator for electrically separating and collecting said remaining cupric oxide from said gas mixture,
(e) a concentrating tower for concentrating said copper chloride etching waste liquor by bringing said copper chloride etching waste liquor into contact with said gas mixture which has been discharged from said electrostatic precipitator,
(f) a hydrochloric acid collecting tower for bringing water into contact with said gas mixture which has been discharged from the concentrating tower after the contact with said copper chloride etching waste liquor, to dissolve said hydrogen chloride contained in said gas mixture into said water and to collect resulting hydrochloric acid, and
(g) a gas cleaning tower for cleaning an exhaust gas which has been discharged from said hydrochloric acid collecting tower and contains remaining hydrogen chloride, by neutralizing said exhaust gas with an aqueous alkali solution.

### BRIEF DESCRIPTION OF THE DRAWING

Fig. 1 is a flow diagram illustrating an embodiment of the process of the present invention and the uses of the cupric oxide and hydrochloric acid which are collected by the process of the present invention.

Fig. 2 is a graph showing the relationship between the temperatures in a roasting furnace and the percentages of cupric chloride dihydrate and cupric oxide in the resulting copper compounds.

Fig. 3 is a flow diagram illustrating an embodiment of the process of the present invention and an embodiment of the apparatus of the present invention.

### DESCRIPTION OF THE PREFERRED EMBODIMENT

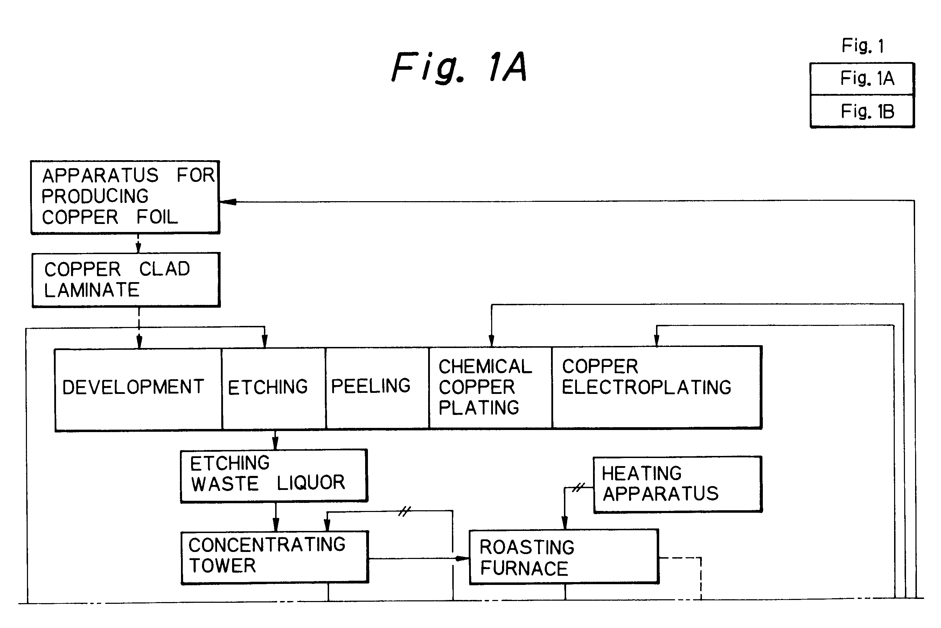

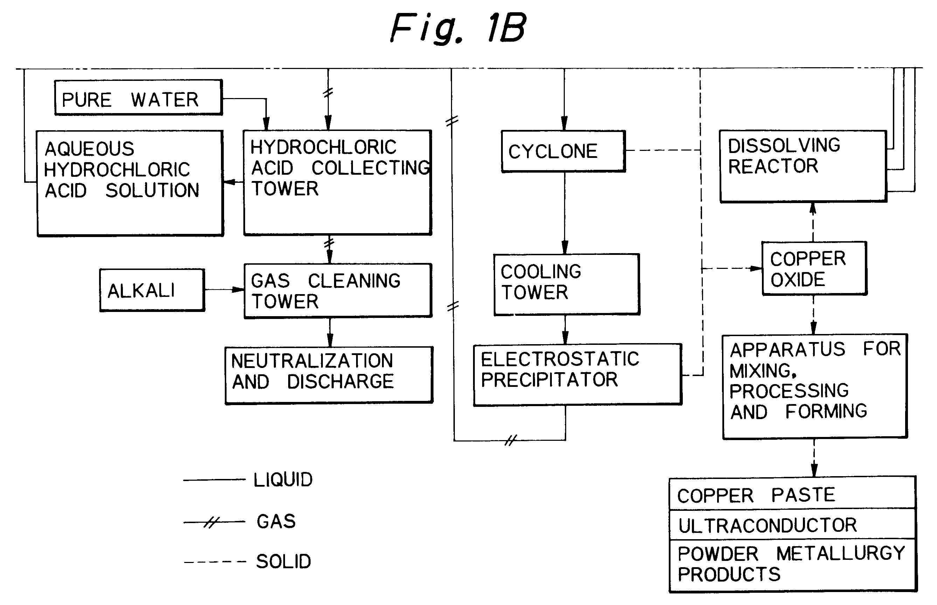

Fig. 1 shows an embodiment of the process of the present invention applied to the treatment of a copper chloride etching waste liquor which has been discharged from a copper chloride etching apparatus used in the developing-etching-peeling stage of a circuit-making process in the production of printed wiring boards, wherein the copper chloride etching waste liquor is thermally decomposed according to the process of the present invention to collect cupric oxide and hydrochloric acid. The collected cupric oxide can be reused for regenerating copper chloride etchant. On the other hand, the collected cupric oxide can be dissolved into aqueous sulfuric acid solution by using a dissolution reactor to use as a material for the production of copper foil in a process of producing printed wiring boards or as a replenishing copper source for the copper sulfate bath for chemical copper plating or copper electroplating. The cupric oxide can also be used as a copper material, for example, for the production of copper paste or superconductor or powder metallurgy by, for example, mixing it with other materials, followed by various processings and forming.

According to the present invention, a copper chloride etching waste liquor is first exposed to a high-temperature atmosphere, to generate cupric oxide and hydrogen chloride. The generation of cupric oxide and hydrogen chloride is presumed to be expressed by the following reaction formula (3).

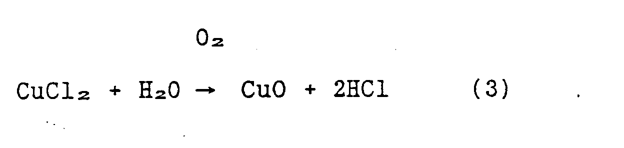

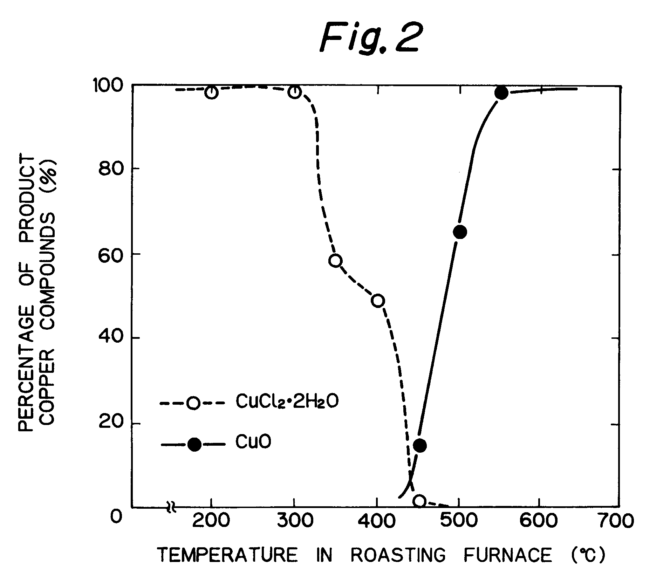

Fig. 2 shows the relationship between the temperatures in a roasting furnace, where a copper chloride etching waste liquor is exposed to a combustion gas of kerosene and the percentages of cupric chloride dihydrate and cupric oxide in the product copper compounds. From the results of the inventors' experiments, as shown in Fig. 2, the generation of cupric oxide begins at about 400 °C , and almost all cupric chloride is oxidation-decomposed into cupric oxide at a temperature in the roasting furnace of about 550 °C . According to the present invention, therefore, a copper chloride etching waste liquor is brought into contact with a high-temperature atmosphere at a temperature of 450 to 1,200 °C , preferably 500 to 900 °C .

A preferred method of exposing a copper chloride etching waste liquor to a high-temperature atmosphere is to sprinkle or spray the copper chloride etching waste liquor into a high-temperature atmosphere.

It is desirable to previously concentrate the copper chloride etching waste liquor to some degree in order to improve the production efficiency of cupric oxide and hydrogen chloride.

Hydrogen chloride, which is the other product shown in the formula (3), is dissolved in water to collect it as hydrochloric acid.

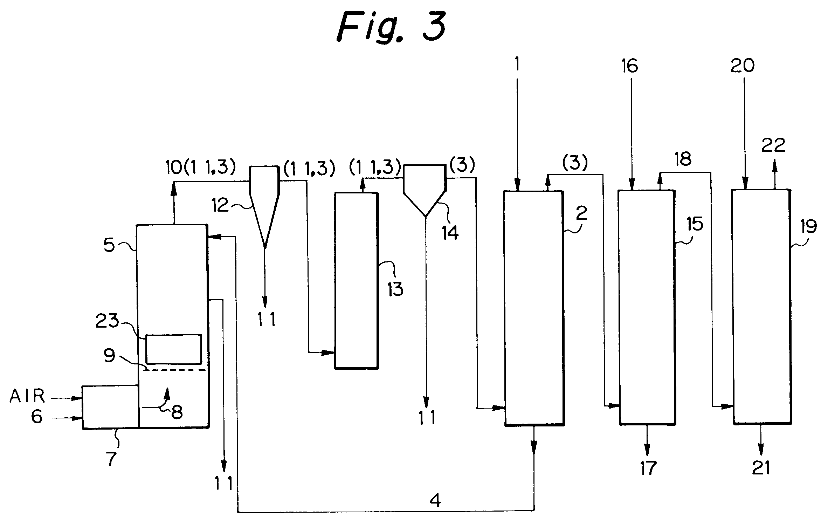

Fig. 3 is a flow diagram illustrating an embodiment of the process of the present invention and an embodiment of the apparatus of the present invention which is suitable for the process embodiment. First a fixed amount of a copper chloride etching waste liquor 1 which has been discharged from a copper chloride etching apparatus is fed to and is concentrated by a contact with a high-temperature gas in a concentrating tower 2. A preferred temperature of the high-temperature gas ranges from 400 to 500 °C . The high-temperature gas used as the heat source for the concentration is a gas mixture 3 which has resulted by the removal of powdery cupric oxide 11 from the hot decomposition product gas 11 generated in a downstream roasting furnace 5. The water contained in the copper chloride etching waste liquor 1 evaporates by the direct, countercurrent contact of the gas mixture 3 with the copper chloride etching waste liquor 1, and thus the waste liquor 1 is concentrated. The gas mixture 3 is used for the purpose of effective use of energy.

The concentrated copper chloride etching waste liquor 4 is then discharged from the bottom of the concentrating tower and is fed by the aid of, for example, a feed pump to the roasting furnace 5. The roasting furnace 5 as shown in Fig. 3 is a fluidized cylindrical shaft roasting furnace

The temperature in the roasting furnace 5 is 450 to 1,200 °C , and it is more preferable to control the temperature of the fluidized bed 23 in the roasting furnace 5 to 500 to 900 °C with a hot blast. In this embodiment, the hot blast is a hot combustion gas 8 of a fuel 6, such as kerosene or propane gas, which has been generated in a hot blast furnace 7 and is blown into the bottom portion of the roasting furnace 5. A gas distribution plate 9 uniformalizes the velocity distribution of the combustion gas 8 to form a stable fluidized bed 23 thereon. In the roasting furnace 5, in or over the fluidized bed 23, the combustion gas 8 blown upwardly through the gas distribution plate 9 comes into contact with the droplets of the concentrated etching waste liquor 4 which are sprinkled through an upper inlet of the roasting furnace 5, and then the hydrochloric acid and water in the droplets evaporate and, simultaneously, copper chlorides are roasted and thermally oxidation-decomposed into cupric oxide and hydrogen chloride. The resulting fine particles of cupric oxide are discharged together with the upward flow of the decomposition product gas through the top portion of the roasting furnace 5. Reference numeral 10 represents the decomposition product gas discharged from the roasting furnace 5, which contains fine particles of cupric oxide 11 and a gas mixture 3 containing hydrogen chloride and vapor. A part of the generating cupric oxide grows in the roasting furnace 5 into particles of 0.5 to 5 mm in particle size, which form the fluidized bed 23. A part of the particles forming the fluidized bed 23, however, are ground again into fine particles by the friction due to their collision with each other and are also discharged from the roasting furnace 5 in company with the decomposition product gas. Excess particles forming the fluidized bed 23 drop out of the roasting furnace 5 through a collecting outlet located higher than the gas distribution plate 9.

The internal materials of the roasting furnace, including chose of the gas distribution plate, the sprinkling nozzle and the internal furnace wall, should be corrosion resistive.

Subsequently, the decomposition product gas 10 containing fine particles of cupric oxide, hydrogen chloride and vapor is fed to a cyclone 12, where the decomposition product gas 10 makes a spiral flow and descends spirally in the cyclone 12, and most fine particles of cupric oxide 11 are collected through the lower end of the cyclone 12. The fine particles of cupric oxide collected by the cyclone 12 generally are 50 µm or less in particle size.

In a cooling tower 13, the remaining part of fine particles of cupric oxide 11 and the gas mixture 3 containing hydrogen chloride and vapor are cooled to a temperature of 400 to 500 °C at which electrostatic precipitators are operable.

After cooling in the cooling tower 13, the remaining part of fine particles of cupric oxide 11 are collected electrically in an electrostatic precipitator 14, and the gas mixture 3 containing hydrogen chloride and vapor is fed from the cooling tower 13 to the concentrating tower 2. Almost all of cupric oxide (close to 100%) can be collected through the course from the roasting in the roasting furnace 5 to the collection by the electrostatic precipitator 14. The fine particles of cupric oxide collected by the electrostatic precipitator 14 are generally 0.5 to 50 µm in particle size. Trace fine particles of cupric oxide which have not been collected by the electrostatic precipitator 14 do not cause any problem since the fine particles accompany the gas mixture 3 to the concentrating tower 2, where the fine particles are dissolved in a fresh copper chloride etching waste liquor 1 and are then subjected again to roasting in the roasting furnace 5.

The gas mixture 3 the heat of which has been taken away in the concentrating tower 2 then flows into a hydrochloric acid collecting tower 15, where hydrogen chloride is dissolved in water 16 to collect it as hydrochloric acid 17. An aqueous hydrochloric acid solution of a concentration of 18 % or more can be obtained in 98 % recovery or more by feeding pure water into the hydrochloric acid collecting tower 15, with the partial pressure of hydrogen chloride uniformalized.

An exhaust gas 18 containing remaining hydrogen chloride and non-condensable gas is neutralized in a gas cleaning tower 19 with an alkali solution 20, such as an aqueous sodium hydroxide solution, and is then discharged as a harmless waste liquor 21 and a harmless exhaust gas 22.

By using the process and apparatus for treating copper chloride etching waste liquor of the present invention, aqueous hydrochloric acid solution and cupric oxide can be obtained in a percentage recovery close to 100 %, and the resultant aqueous hydrochloric acid may be reused circularly for the preparation of etchant, and the cupric oxide may be used effectively as a material for the production of printed wiring boards.

The technique of exposing the copper chloride etching waste liquor to a high-temperature atmosphere is not limited to the above-mentioned technique using a fluidized roasting furnace where a waste liquor is sprinkled or sprayed, and other common techniques, such as the one using gas-liquid contacting plates with a large surface area, may also be used.

Although the above-described embodiment is for the treatment of the copper chloride etching waste liquor resulting from the etching process in the production of printed wiring boards, the present invention can also be applied, for example, to the treatment of the copper chloride etching waste liquor which is generated in the production processes of copper clad laminates by treating the copper on the tag ends of copper clad laminates or on defective copper clad laminates.

The fine particles of cupric oxide obtained by the present invention are so fine that the fine particles can be dissolved very easily in dissolution reagents.

An example of the effective use of the resultant cupric oxide is the production of copper clad laminate which is a material of printed wiring boards. Copper clad laminate is generally produced by laminating on a laminate board an electrolytic copper foil formed from a copper sulfate bath, in which the cupric oxide obtained by the present invention may be used as a replenishing resource of copper. The cupric oxide can also be used as a copper resource for the copper sulfate bath which is used in the electroplating process for the production of printed wiring boards. Another method of making circuits of printed wiring boards is an electroless copper plating method. The electroless copper plating method is generally carried out by forming a complex compound of copper with, for example, ethylenediaminetetraacetic acid or sodium potassium tartrate, adding thereto a reducing reagent, such as formaldehyde, sodium hydrophosphite or glyoxylic acid, to chemically deposit copper. The cupric oxide obtained by the present invention can be used as a useful copper replenishing resource because it forms easily such complex compounds.

The cupric oxide obtained by the present invention, further, may be used for producing superconductors by mixing and roasting it with other rare earth elements, or be compression sintered to form a powder metallurgy product, or be reduced with hydrogen flame to produce copper paste or a metal copper material.

The process of the present invention enables efficient treatment of copper chloride etching waste liquor, which has caused serious problems in the environmental preservation, and as well enables recovery of industrially useful materials from the waste liquor. Examples of the effects of the present invention are as follows:
(1) Almost all of the hydrochloric acid resulting from the thermal decomposition can be used for the regeneration of copper chloride etchant, thereby enabling the operation of a recycling system in one factory;
(2) The treating process of the present invention is more efficient, requires much less cost and is easier to control, as compared with the substitution method and the electrolytic method;
(3) The resulting cupric oxide can be used effectively as a copper material of good quality, for example, for the production of electrolytic copper foil, copper paste or superconductor, copper electroplating, chemical plating or powder metallurgy.

### EXAMPLE

20 kg of a copper chloride etching waste liquor was treated by the process of the present invention using a pilot plant of the apparatus as shown in Fig. 3.

First the copper chloride etching waste liquor was concentrated in a concentrating tower. The concentration was carried out by bringing the copper chloride etching waste liquor flowing in through the upper portion of the concentrating tower into contact with a hot gas mixture containing hydrogen chloride and vapor (the temperature of the gas mixture: 450 °C ), which had been generated by roasting a concentrated copper chloride etching waste liquor in a roasting furnace of a cylindrical shaft type, had been passed through a cyclone, a cooling tower and an electrostatic precipitator and was fed through the lower portion of the concentrating tower. The compositions of the copper chloride etching waste liquor and the concentrate thereof are shown in Table 1.

**Table 1**

| | Copper chloride etching waste liquor | | Concentrated copper chloride etching waste liquor | |
|---|---|---|---|---|
| Components | % | kg | % | kg |
| CuCl₂ | 21.20 | 4.24 | 40.00 | 4.43 |
| CuCl | 0.20 | 0.04 | 0 | 0 |
| HCl | 3.20 | 0.64 | 5.00 | 0.55 |
| H₂O | 75.40 | 15.08 | 55.00 | 6.09 |
| Total | 100.00 | 20.00 | 100.00 | 11.08 |

The concentrated copper chloride etching waste liquor was fed by a feed pump to the roasting furnace, where the fed etching waste liquor was sprinkled from an upper portion of the roasting furnace, while a combustion gas of kerosene was blown in through a gas distribution plate. The droplets of the concentrated copper chloride etching waste liquor came into contact with the combustion gas in the fluidized bed of the roasting furnace. The temperature of the fluidized bed was adjusted to 700 °C . Table 2 shows the amounts of hydrogen chloride and vapor in the gas mixture discharged from the roasting furnace.

**Table 2**

| Components | kg | Nm³ |
|---|---|---|
| HCl | 2.96 | 1.82 |
| H₂O | 5.50 | 6.84 |
| Total | 8.46 | 8.65 |

The cupric oxide generated by the roasting was collected by using a cyclone, a cooling tower and an electrostatic precipitator. In the cooling tower, the gas mixture was cooled to 450 °C . Table 3 shows the composition and the total yield of copper oxides which were collected from the roasting furnace, the cyclone and the electrostatic precipitator.

**Table 3**

| Copper oxides | | |
|---|---|---|
| Components | % | kg |
| CuO | 99.50 | 2.62 |
| Others | 0.50 | 0.01 |
| Total | 100.00 | 2.63 |

The particle sizes of the fine particles of cupric oxide collected from the roasting furnace, the cyclone and the electrostatic precipitator were 1 to 5mm, 1 to 100 µm and 0.5 to 50 µm, respectively.

The gas mixture discharged from the electrostatic precipitator was fed through the concentrating tower to a hydrochloric acid collecting tower, where the gas mixture was then brought into contact with 7.98 g in total of pure water. Table 4 shows the composition of the hydrochloric acid solution which flowed out from the hydrochloric acid collecting tower.

**Table 4**

| Hydrochloric acid solution | | |
|---|---|---|
| Components | % | kg |
| HCl | 18.00 | 2.96 |
| H₂O | 82.00 | 13.48 |
| Total | 100.00 | 16.44 |

As shown in Table 3 and Table 4, 2.62 kg of cupric oxide and 16.4 kg of a 18 % aqueous hydrochloric acid solution were obtained in a yield close to 100 %.

The obtained aqueous hydrochloric acid solution exhibited again its sufficient ability of regenerating a copper chloride etchant. The obtained cupric oxide had a very high purity of 99.5 % by weight. The relatively large particles of cupric oxide obtained in the roasting furnace and the cyclone were dissolved readily in an aqueous sulfuric acid solution to form a solution, which could be used as a mother liquid in copper sulfate electroplating and electrolytic copper foil plating without any problem. The ultra fine particles of cupric oxide obtained in the electrostatic precipitator were dissolved sufficiently in a sodium hydroxide · ethylenediaminetetraacetic acid solution by using a stirring and mixing apparatus, and then filtered to remove solids, to form a mother liquid of an electroless copper plating bath. Chemical plating of copper on a printed board was confirmed by adding a formaldehyde solution into the mother liquid which was kept at 70 °C . Further, the obtained fine particles of cupric oxide can also be used as superconductor ingredient as it is, or after washing with pure water followed by drying. The obtained cupric oxide can also be reduced in a hydrogen flame reduction furnace into powdery copper, to use as a material of conductive copper paste, or can be used for powder metallurgy by mixing and forming with other binders.

## Claims

1. A process for treating copper chloride etching waste liquor which is generated in a process for etching copper with a copper chloride etchant, comprising:
exposing said copper chloride etching waste liquor to an atmosphere of a high temperature ranging from 450 to 1,200 °C in the presence of oxygen gas in a fluidized cylindrical shaft roasting furnace by introducing a hot combustion gas resulting from combustion of air and fuel into a bottom portion of said furnace from a blast furnace connected to the bottom portion, to generate cupric oxide and hydrogen chloride,
separating said cupric oxide and said hydrogen chloride,
collecting the separated cupric oxide,
dissolving the separated hydrogen chloride into water to form hydrochloric acid, and
collecting said hydrochloric acid.

2. An apparatus for treating copper chloride etching waste liquor which generates in a process for etching copper with a copper chloride etchant, comprising:
(a) a roasting furnace for exposing said copper chloride etching waste liquor, which has been concentrated in a concentrating tower, to an atmosphere of a high temperature ranging from 450 to 1,200 °C, in the presence of oxygen, to generate cupric oxide and a gas mixture containing hydrogen chloride and vapour,
(b) a cyclone for separating and collecting said cupric oxide from said gas mixture,
(c) a cooling tower for cooling remaining cupric oxide and said gas mixture which have been discharged from the cyclone to a temperature of 400 to 500 °C,
(d) an electrostatic precipitator for electrically separating and collecting said remaining cupric oxide from said gas mixture,
(e) a concentrating tower for concentrating said copper chloride etching waste liquor by bringing said copper chloride etching waste liquor into contact with said gas mixture which has been discharged from said electrostatic precipitator,
(f) a hydrochloric acid collecting tower for bringing water into contact with said gas mixture which has been discharged from the concentrating tower after the contact with said copper chloride etching waste liquor, to dissolve said hydrogen chloride contained in said gas mixture into said water and to collect resulting hydrochloric acid, and
(g) a gas cleaning tower for cleaning an exhaust gas which has been discharged from said hydrochloric acid collecting tower and contains remaining hydrogen chloride, by neutralizing said exhaust gas with an aqueous alkali solution.

3. The process according to claim 1 further comprising passing said hot combustion gas through a distribution plate at said bottom portion of said furnace.

4. The process according to claim 1 wherein particles of said cupric oxide are separated from said hydrogen chloride.

5. The process according to claim 4 wherein said particles of said cupric oxide are separated in a cyclone separator.

6. The process according to claim 4 wherein said particles of said cupric oxide are separated by electrostaticly precipitating said particles.

7. The process according to claim 1 wherein the temperature in the fluidized cylindrical shaft roasting furnace is 500 to 900 °C.

8. The process according to claim 1 further comprising, concentrating said copper chloride etching waste liquor before introducing it into a roasting furnace.

9. The process according to claim 8 wherein said copper chloride etching waste liquor is concentrated by contacting it with hydrogen chloride from said roasting furnace.

10. The process according to claim 9 wherein said cupric oxide particles are at least partially separated from said hydrogen chloride prior to said contacting said copper chloride etching waste liquor with said hydrogen chloride.

## Patentansprüche

1. Verfahren zum Aufbereiten einer Kupferchlorid-ÄtzAbfallflüssigkeit, die in einem Verfahren zum Ätzen von Kupfer mit einem Kupferchlorid-Ätzmittel gebildet wird, welches folgende Schritte umfaßt:
Inkontaktbringen der Kupferchlorid-Ätz-Abfallflüssigkeit mit einer Atmosphäre hoher Temperatur im Bereich von 450 bis 1200°C in Gegenwart von gasförmigen Sauerstoff in einem zylindrischen Fluidbett-Röstschachtofen durch Einleiten eines durch Verbrennung von Brennstoff mit Luft erzeugten heißen Verbrennungsgases in den Bodenabschnitt des Ofens aus einem mit dem Bodenabschnitt verbundenen Gebläseofen, wobei Kupfer(II)-oxid und Chlorwasserstoff gebildet wird,
Abtrennen des Kupfer(II)-oxids und des Chlorwasserstoffs,
Gewinnen des abgetrennten Kupfer(II)-oxids,
Auflösen des abgetrennten Chlorwasserstoffs in Wasser unter Bildung von Chlorwasserstoffsäure und
Gewinnen der Chlorwasserstoffsäure.

2. Vorrichtung zum Aufbereiten von Kupferchlorid-Ätz-Abfallflüssigkeit, die in einem Verfahren zum Ätzen von Kupfer mit einem Kupferchlorid-Ätzmittel gebildet wird, welche umfaßt:
(a) einen Röstofen zum Inkontaktbringen der Kupferchlorid-Ätz-Abfallflüssigkeit, die in einem Konzentrierturm konzentriert worden ist, mit einer Atmosphäre hoher Temperatur im Bereich von 450 bis 1200°C in Gegenwart von Sauerstoff zur Bildung von Kupfer(II)-oxid und eines Chlorwasserstoff und Wasserdampf enthaltenden Gasgemisches,
(b) ein Zyklon zum Abtrennen und Gewinnen das Kupfer(II)-oxids aus dem Gasgemisch,
(c) einen Kühlturm zum Kühlen des verbleibenden Kupfer(II)-oxids und des Gasgemisches, die aus dem Zyklon entnommen wurden, auf eine Temperatur von 400 bis 500°C,
(d) einen elektrostatischen Abscheider zur elektrischen Abscheidung und Gewinnung des verbleibenden Kupfer(II)-oxids aus dem Gasgemisch,
(e) einen Konzentrierturm zum Konzentrieren der Kupferchlorid-Ätz-Abfallflüssigkeit, in dem die Kupferchlorid-Ätz-Abfallflüssigkeit in Kontakt mit dem Gasgemisch gebracht wird, welches aus dem elektrostatischen Abscheider abgezogen wurde,
(f) einen Gewinnungsturm für Chlorwasserstoffsäure, in dem Wasser mit dem Gasgemisch in Kontakt gebracht wird, das aus dem Konzentrierturm nach Kontakt mit der Kupferchlorid-Ätz-Abfallflüssigkeit abgezogen wurde, wobei der in dem Gasgemisch enthaltene Chlorwasserstoff in dem Wasser gelöst wird und die resultierende Chlorwasserstoffsäure gewonnen wird, und
(g) einen Gasreinigungsturm zum Reinigen des aus dem Chlorwasserstoffsäure-Gewinnungsturm abgezogenen Abgases, welches restlichen Chlorwasserstoff enthält, durch Neutralisation des Abgases mit einer wäßrigen Alkalilösung.

3. Verfahren nach Anspruch 1, bei dem weiterhin das heiße Verbrennungsgas im Bodenabschnitt des Ofens durch eine Verteilerplatte geleitet wird.

4. Verfahren nach Anspruch 1, wobei Teilchen des Kupfer(II)-oxids von dem Chlorwasserstoff getrennt werden.

5. Verfahren nach Anspruch 4, wobei die Teilchen des Kupfer(II)-oxids in einem Zyklonabscheider abgetrennt werden.

6. Verfahren nach Anspruch 4, wobei die Teilchen des Kupfer(II)-Oxids durch elektrostatische Abscheidung der Teilchen abgetrennt werden.

7. Verfahren nach Anspruch 1, wobei die Temperatur in dem zylindrischen Fluidbett-Röstschachtofen 500 bis 900°C beträgt.

8. Verfahren nach Anspruch 1, welches weiterhin das Konzentrieren der Kupferchlorid-Ätz-Abfallflüssigkeit vor dem Einführen in einen Röstofen umfaßt.

9. Verfahren nach Anspruch 8, wobei die Kupferchlorid-Ätz-Abfallflüssigkeit dadurch konzentriert wird, daß sie mit Chlorwasserstoff aus dem Röstofen in Kontakt gebracht wird.

10. Verfahren nach Anspruch 9, wobei die Kupfer(II)-oxid-Teilchen mindestens teilweise von dem Chlorwasserstoff abgetrennt werden, bevor die Kupferchlorid-Ätz-Anfallflüssigkeit mit dem Chlorwasserstoff in Kontakt gebracht wird.

## Revendications

1. Procédé de traitement d'un liquide de décapage usé contenant du chlorure de cuivre qui est produit dans un procédé de décapage du cuivre avec un agent de décapage au chlorure de cuivre, comprenant les étapes consistant à:
exposer ledit liquide de décapage usé contenant du chlorure de cuivre à une atmosphère à une température élevée s'échelonnant de 450 à 1 200°C en présence d'oxygène gazeux dans un four de grillage à cuve cylindrique fluidisé en introduisant un gaz de combustion chaud provenant de la combustion d'air et de carburant dans une partie inférieure dudit four issu d'un haut fourneau relié à la partie inférieure, pour produire de l'oxyde cuivrique et du chlorure d'hydrogène,
séparer ledit oxyde cuivrique et ledit chlorure d'hydrogène,
recueillir l'oxyde cuivrique séparé,
dissoudre le chlorure d'hydrogène séparé dans de l'eau pour former de l'acide chlorhydrique, et
recueillir ledit acide chlorhydrique.

2. Appareil de traitement d'un liquide de décapage usé contenant du chlorure de cuivre qui est produit dans un procédé de décapage du cuivre avec un agent de décapage au chlorure de cuivre, comprenant:
(a) un four de grillage pour exposer ledit liquide de décapage usé contenant du chlorure de cuivre, qui a été concentré dans une tour de concentration, à une atmosphère à une température élevée s'échelonnant de 450 à 1 200°C, en présence d'oxygène, pour produire de l'oxyde cuivrique et un mélange de gaz contenant du chlorure d'hydrogène et de la vapeur,
(b) un cyclone pour séparer et recueillir ledit oxyde cuivrique dudit mélange gazeux,
(c) une tour de refroidissement pour refroidir l'oxyde cuivrique restant et ledit mélange de gaz qui ont été déchargés du cyclone à une température de 400 à 500°C,
(d) un dispositif de précipitation électrostatique pour séparer électriquement et recueillir ledit oxyde cuivrique restant dudit mélange de gaz,
(e) une tour de concentration pour concentrer ledit liquide de décapage usé contenant du chlorure de cuivre en mettant en contact ledit liquide de décapage usé contenant du chlorure de cuivre avec ledit mélange de gaz qui a été déchargé dudit dispositif de précipitation électrostatique,
(f) une tour de récupération d'acide chlorhydrique pour mettre en contact de l'eau avec ledit mélange de gaz qui a été déchargé de la tour de concentration après la mise en contact avec ledit liquide de décapage usé contenant du chlorure de cuivre, pour dissoudre ledit chlorure d'hydrogène contenu dans ledit mélange de gaz dans ladite eau et pour recueillir l'acide chlorhydrique résultant, et
(g) une tour de lavage de gaz pour laver un gaz d'échappement qui a été déchargé de ladite tour de récupération d'acide chlorhydrique et qui contient le chlorure d'hydrogène restant, par neutralisation dudit gaz d'échappement avec une solution aqueuse alcaline.

3. Procédé selon la revendication 1 comprenant, en outre, le passage dudit gaz de combustion chaud à travers une plaque de distribution à ladite extrémité inférieure dudit four.

4. Procédé selon la revendication 1, dans lequel les particules dudit oxyde cuivrique sont séparées dudit chlorure d'hydrogène.

5. Procédé selon la revendication 4, dans lequel lesdites particules dudit oxyde cuivrique sont séparées dans un séparateur à cyclone.

6. Procédé selon la revendication 4, dans lequel lesdites particules dudit oxyde cuivrique sont séparées par précipitation électrostatique desdites particules.

7. Procédé selon la revendication 1, dans lequel la température dans le four de grillage à cuve cylindrique fluidisé est de 500 à 900°C.

8. Procédé selon la revendication 1 comprenant, en outre, la concentration dudit liquide de décapage usé contenant du chlorure de cuivre avant l'introduction dans le four de grillage.

9. Procédé selon la revendication 8, dans lequel ledit liquide de décapage usé contenant du chlorure de cuivre est concentré par mise en contact avec du chlorure d'hydrogène provenant dudit four de grillage.

10. Procédé selon la revendication 9, dans lequel lesdites particules d'oxyde cuivrique sont au moins partiellement séparées dudit chlorure d'hydrogène avant ladite mise en contact dudit liquide de décapage usé contenant du chlorure de cuivre avec ledit chlorure d'hydrogène.
